Europäisches Patentamt

**European Patent Office**

Office européen des brevets

(19)

(11) Numéro de publication: **0 201 116**
**B1**

(12) **FASCICULE DE BREVET EUROPEEN**

(45) Date de publication du fascicule du brevet:
18.07.90

(51) Int. Cl.⁵: **F02F 3/02,** F16J 1/02, F16J 1/08

(21) Numéro de dépôt: 86200553.5

(22) Date de dépôt: **02.04.86**

(54) Piston de moteurs endothermiques alternatifs avec lubrification à coussin d'huile.

(30) Priorité: **12.04.85 IT 6734685**

(43) Date de publication de la demande:
**17.12.86 Bulletin 86/46**

(45) Mention de la délivrance du brevet:
**18.07.90 Bulletin 90/29**

(84) Etats contractants désignés:
**DE FR SE**

(56) Documents cités:
**DE-A- 2 446 870**
**DE-A- 3 437 111**
**DE-A- 3 446 121**
**DE-C- 437 422**
**US-A- 1 468 586**
**US-A- 1 760 122**
**US-A- 2 407 440**

(73) Titulaire: **AE BORGO S.p.a., Str. Valdellatorre Km.2,700,
I-10091 Alpignano (Turin)(IT)**

(72) Inventeur: **Bruni, Ludovico, Dr.-Ing., Via San Marino, 11,
I-10137 Torino(IT)**

(74) Mandataire: **de Blasio, Francesco, Dipl.-Ing., Cabinet
SIMONI DE BLASIO Via XX Settembre, 62,
I-10121 Torino(IT)**

ACTORUM AG

**Description**

Dans les moteurs alternatifs à combustion interne, et en particulier dans les moteurs à cycle OTTO de conception nouvelle et actuelle, la lubrification des pistons, dans certains cas et pour certaines conditions de fonctionnement du moteur, peut se faire précaire. Si cette condition se produit, elle ne crée pas seulement des problèmes de micro-grippages, de grippages et de rayures de la jupe du piston et de la chemise, mais elle peut donner lieu à un bruit notable du piston et, par conséquent, du moteur. On sait que, pour remédier à ces inconvénients, on fait appel à des systèmes capables de renforcer la lubrification des pistons, en modifiant le profil polaire de ces derniers, on sait aussi que la zone des pistons soumise aux plus fortes sollicitations et donc la plus grande usure est celle de la jupe qui s'étend sur 20° environ, dans les deux sens opposés, par rapport à la ligne normale de l'axe du piston, sur les deux côtés symétriques et opposés du piston. Le but de la présente invention consiste à renforcer la lubrification dans les zones soumises à une plus grande pression spécifique et donc à une plus forte usure.

Suivant le document US-A 1 760 122 on connaît un piston de moteur endothermique alternatif muni de moyens réalisant, avec le moteur en marche, la lubrification à coussin d'huile, comprenant des creux aménagés sur chacune des faces de sa jupe opposées de part et d'autre du plan contenant l'axe du piston d'une part et l'axe de l'axe de piston d'autre part pour contenir de l'huile sous pression, sur chacune desdites faces étant prévue, parallèlement à l'axe du piston, une série desdits creux, chaque creux s'étendant substantiellement circonférentiellement. Toutefois les creux prévus suivant ce document sont ouverts vers la partie inférieure du piston qui racle l'huile sur la paroi du cylindre, de sorte que l'huile sous pression peut toujours s'échapper de ces creux, qui ne sont donc pas en condition de former, en interaction avec la chemise du cylindre, des cavités fermées dans lesquelles l'huile soit renfermée.

En vue de cet état de la technique, la présente invention a pour objet un piston de moteur endothermique alternatif muni de moyens réalisant, avec le moteur en marche, la lubrification à coussin d'huile, comprenant des creux aménagés sur chacune des faces de sa jupe opposées de part et d'autre du plan contenant l'axe du piston d'une part et l'axe de l'axe de piston d'autre part pour contenir de l'huile sous pression, sur chacune desdites faces étant prévue, parallèlement à l'axe du piston, une série desdits creux, chaque creux s'étendant substantiellement circonférentiellement, caractérisé par le fait que chaque creux présente circonférentiellement une extension polaire totale ne dépassant pas environ 40°, avec une extension angulaire de part et d'autre du plan contenant l'axe du piston et normal à l'axe de l'axe de piston ne dépassant pas environ 20° et une profondeur ne dépassant pas environ 50 microns, chaque creux étant tel qu'il réalise en interaction avec la chemise du cylindre une cavité fermée de toutes parts. Les caractéristiques plus précises de l'invention sont décrites ci-après, en se référant aux dessins schématiques en annexe fournis à titre d'explication.

La figure 1 présente la vue de face d'un piston qui peut prendre en tout cas un profil différent quelconque;
- la figure 2 présente une vue en coupe transversale du même piston, effectuée selon la ligne II-II de la figure 1;
- la figure 3, à l'échelle plus grande, illustre une partie du profil longitudinal de la jupe du piston;
- la figure 4 présente un quart ou un quadrant du profil polaire de la jupe.

Sur les dessins, par 1 est indiqué le piston dans son ensemble comprenant la jupe 2 définie en haut par la tête 3; par 4 sont indiquées les gorges périmétrales pour les segments; par 5 l'axe du piston et par 5a les renforcements opposés aménagés dans la jupe 2 à 90° par rapport à l'axe du piston.

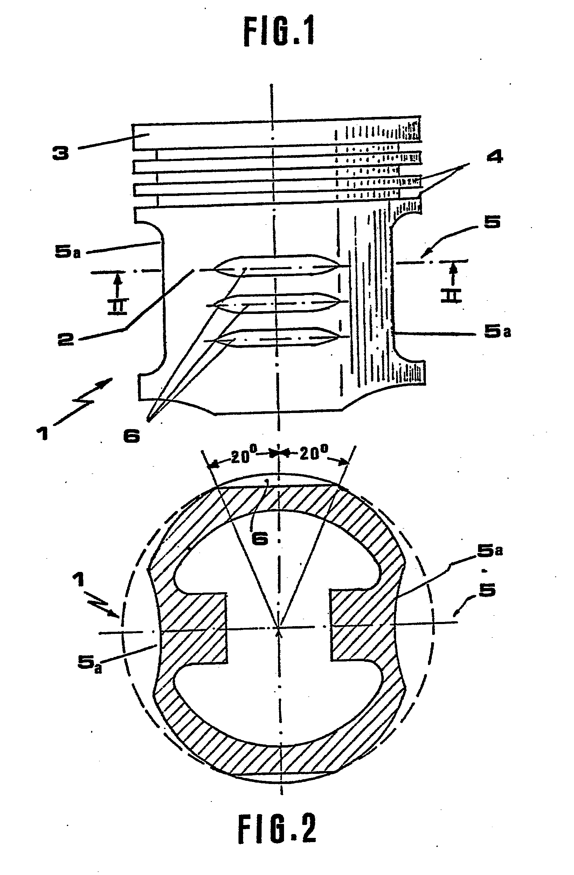

Conformément à l'invention, sur les deux côtés de la jupe, parallèlement au plan vertical passant par l'axe 5 de l'axe du piston, sont aménagés, de préférence par rectification à diamant, les creux 6 qui, à titre indicatif, possèdent le profil représenté sur le dessin (fig.1) et présentent une profondeur radiale variable de 0,005mm à 0,05mm environ de valeur diamétrale ou de la largeur; valeur variable en fonction du profil traditionnel que le piston devrait avoir.

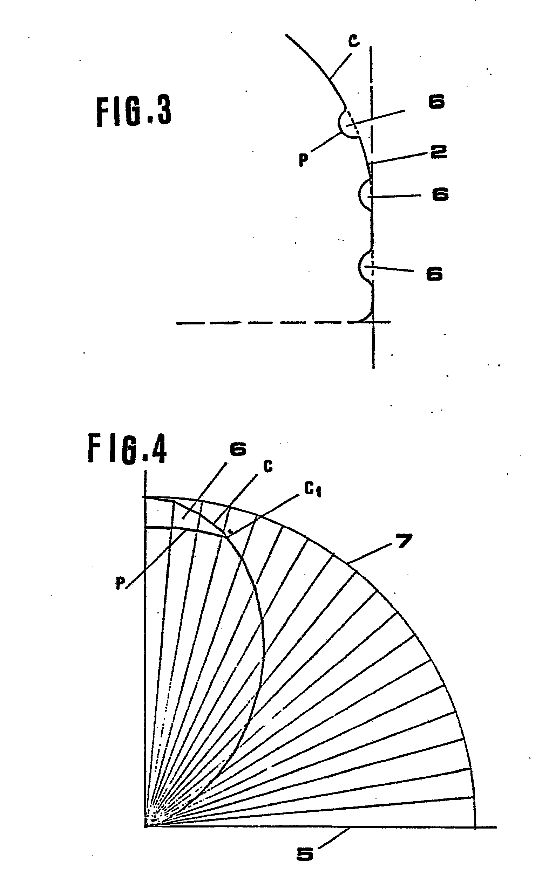

Dans le sens polaire, les creux 6 présentent une extension radiale de 40° environ, fig.2 et 3, et touchent les côtés diamétralement opposés du piston, fig.2, parallèlement à l'axe 5 du piston.

Le nombre et le pas des creux 6 sont fixés à l'avance en fonction de la hauteur de la jupe 2 comme aussi en fonction des points de contact de cette jupe par rapport à la chemise du cylindre correspondant.

En se référant à la figure 3, dans le profil de la jupe 2 indiqué par C, les creux 6 sont parallèles et dans un ordre superposés, aménagés sur les deux côtés opposés du piston (fig.2). En se référant à la figure 4 qui représente de façon schématique un quadrant de la coupe polaire de la jupe 2 du piston 1 - coupe considérée selon un plan transversal parallèle à l'axe de l'axe du piston, passant par deux creux opposés de manière symétrique, seule une partie d'un creux est visible sous 7 et montre le cercle circonscrit à la dimension maximale de la jupe du piston, dans le même plan, dont le profil réel est indiqué par C. - Chaque creux 6 est défini par le profil P de sa base, avec le profilC de la jupe.

De face, tous les creux 6 qui font partie des deux ordres opposés, sont fermés par la surface interne de la chemise de cylindre, réalisant ainsi des poches et des récipients de lubrifiant comprimé dans ce logement par le mouvement alterné du piston à l'intérieur et par rapport à la chemise correspondante.

les dimensions de chaque creux 6 sont choisies, de préférence, à l'intérieur des valeurs suivantes :
- profondeur : 0,005 mm à 0,05 mm;
-extension longitudinale : 5 mm;
- extension polaire : 40°.

Il a été démontré expérimentalement que, grâce au perfectionnement décrit, dans les zones de plus forte sollicitation de la jupe du piston, se réalise uen lubrification à coussin d'huile, qui présente les avantages suivants :
- chaque creux 6 constitue une poche ou une zone d'accumulation de l'huile lubrifiante, qui entre sous pression pendant le mouvement correspondant piston-chemise, lubrifiant ainsi de manière appropriée les zones portantes;
- la lubrification constante ainsi obtenue des zones les plus fortement sollicitées élimine les problèmes de mini-grippages qui se présentent fréquemment dans les moteurs très rapides actuels;
- Réduction notable des glissements (frottement rasant) grâce à la présence des poches d'huile comme aussi de la surface réduite de glissement de la jupe, à partir de laquelle il est possible de déduire la surface totale des deux ordres de creux 6;
- Réduction du bruit des pistons grâce à la présence des coussins d'huile;
- Economie du procédé d'usinage nécessaire pour munir chaque piston 1 des deux ordres opposés de poches 6, réalisables simultanément avec l'usinage de la jupe de chaque piston;
- Amélioration notable du rendement mécanique du moteur équipé de pistons en accord avec le perfectionnement décrit.

Les creux 6 peuvent être réalisés simultanément lors de l'usinage du profil C et raccordés à ce dernier à l'aide de machines à commande numérique spéciales. Ils peuvent toutefois être réalisés aussi à l'aide d'une première opération de rectification par diamant du profil longitudinal et polaire C, suivie d'une seconde passe qui crée les poches aménageant ainsi, dans le sens longitudinal, le renfoncement de laprofondeur voulue et, dans le sens polaire, l'ampleur de 40° environ réalisable par un nouveau profil polaire d'une ovalisation zéro ou, en tout cas, réduite par rapport à l'ovalisation du profil C et d'une valeur qui permet d'obtenir l'ampleur voulue.

**Revendications**

1. Piston de moteur endothermique alternatif muni de moyens réalisant, avec le moteur en marche, la lubrification à coussin d'huile, comprenant des creux (6) aménagés sur chacune des faces de sa jupe (2) opposées de part et d'autre du plan contenant l'axe du piston d'une part et l'axe (5) de l'axe de piston d'autre part pour contenir de l'huile sous pression, sur chacune desdites faces étant prévue, parallèlement à l'axe du piston, une série desdits creux, chaque creux s'étendant substantiellement circonférentiellement, caractérisé par le fait que chaque creux (6) présente circonférentiellement une extension polaire totale ne dépassant pas environ 40°, avec une extension angulaire de part et d'autre du plan contenant l'axe du piston et normal à l'axe de l'axe de piston ne dépassant pas environ 20° et une profondeur ne dépassant pas environ 50 microns, chaque creux étant tel qu'il réalise en interaction avec la chemise du cylindre une cavité fermée de toutes parts.

2. Piston selon la revendication 1, caractérisé par le fait que chaque creux (6) a une extension longitudinale ne dépassant pas environ 5 mm.

3. Piston selon la revendication 2, caractérisé par le fait que chaque creux (6) a une profondeur de 0,005 mm environ, une extension longitudinale de 5 mm environ et une extension polaire d'environ 40°.

**Claims**

1. A piston for alternative endothermic engines provided with means apt to create oil cushion lubrification during engine operation, comprising a series of pockets (6) located on both sides of the piston skirt (2) opposite on either sides of the plane containing the piston axis on one side and the piston axis (5) on the other side, in order to contain oil under pressure, either of said sides being provided, parallely to the piston pin axis, with a series of said pockets, each pocket substantially extending in a circumferential fashion, the piston being characterized in that each pocket (6) circumferentially presents a total polar extension which does not exceed approximately 40°, with an angular extension, on either sides of the plane containing the piston axis and normal to the piston pin axis not superior to 20° approximately, and a depth not superior to 50 micron approximately; each pocket being apt to create with the combined action of the cylinder liner a concavity which is closed on all sides.

2. A piston according to claim 1, characterized in that each pocket (6) has a longitudinal extension not superior to 5 mm approximately.

3. A piston according to claim 2, characterized in that each pocket (6) has a depth of approximately 0,005 mm, a longitudinal extension of approximately 5 mm and a polar extension of approximately 40°.

**Patentansprüche**

1. Kolben für einen Kolben-Verbrennungsmotor, mit Mitteln, die bei laufendem Motor für eine Ölkissenschmierung sorgen, mit an jeder Fläche des Kolbenmantels (2) ausgebildeten Nuten (6), die an der einen und an der anderen Seite der Ebene einander gegenüberliegen, in der an der einen Seite die Achse des Kolbens und an der anderen Seite die Achse (5) des Kolbenbolzens liegt, um Drucköl zu enthalten, wobei an jeder dieser Flächen eine Reihe von parallel zur Achse des Kolbenbolzens verlaufenden Nuten (6) vorgesehen ist und sich jede Nut im wesentlichen in Kreislinienrichtung erstreckt, dadurch gekennzeichnet, daß jede Nut (6) in Kreislinienrichtung eine Polarerstreckung von insgesamt nicht mehr als ca. 40°, eine Winkelerstreckung von nicht mehr als ca. 20° an der einen und an der anderen Seite der Ebene, in der die Achse des Kolbens liegt und die senkrecht zur Achse des Kolbenbolzens verläuft, und eine Tiefe von nicht mehr als ca. 50 Mikron aufweist und daß jede Nut so ausgebildet ist, daß sie zusammen mit der Zylinderlaufbuchse einen allseitig geschlossenen Hohlraum bildet.

2. Kolben nach Anspruch 1, dadurch gekennzeichnet, daß jede Nut (6) eine Längserstreckung von nicht mehr als ca. 5 mm hat.

3. Kolben nach Anspruch 2, dadurch gekennzeichnet, daß jede Nut (6) eine Tiefe von ca. 0,005 mm, eine Längserstreckung von ca. 5 mm und eine Polarerstreckung von ca. 40° hat.

# FIG.1

# FIG.2

FIG.3

FIG.4